(19) Europäisches Patentamt
European Patent Office
Office européen des brevets

(11) EP 2 910 574 A1

(12) **EUROPEAN PATENT APPLICATION**
published in accordance with Art. 153(4) EPC

(43) Date of publication:
**26.08.2015 Bulletin 2015/35**

(21) Application number: **13846378.1**

(22) Date of filing: **07.10.2013**

(51) Int Cl.:
***C08B 15/08*** *(2006.01)* ***D21H 11/18*** *(2006.01)*
***D21H 11/20*** *(2006.01)*

(86) International application number:
**PCT/JP2013/077220**

(87) International publication number:
**WO 2014/061485 (24.04.2014 Gazette 2014/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.10.2012 JP 2012228681**

(71) Applicant: **Nippon Paper Industries Co., Ltd.**
**Tokyo 114-0002 (JP)**

(72) Inventors:
- **TSUJI, Shiho**
  **Tokyo 114-0002 (JP)**
- **NAKAYAMA, Takeshi**
  **Tokyo 114-0002 (JP)**
- **MIYAWAKI, Shoichi**
  **Tokyo 114-0002 (JP)**

(74) Representative: **Carpmaels & Ransford LLP**
**One Southampton Row**
**London WC1B 5HA (GB)**

# (54) CELLULOSE NANOFIBERS

(57) New cellulose nanofibers having a number average fiber length of 250 nm or lower, and a number average fiber diameter of 2 to 5 nm. These cellulose nanofibers provide a cellulose nanofiber dispersion that has a low viscosity even at a high concentration.

EP 2 910 574 A1

## Description

### TECHNICAL FIELD

The present invention relates to cellulose nanofibers.

### BACKGROUND ART

Natural fibers or synthetic fibers having a diameter of approximately 1 to 100 nm are generally called nanofibers. Cellulose nanofibers, which are a type of nanofibers, are anticipated to expand to various usages, such as use for reinforcement of composite materials.

A known method for obtaining cellulose nanofibers is a method of oxidizing cellulose fibers in water under the presence of N-oxyl compounds, etc., removing impurities, and applying dispersion force (Patent Document 1).

With the unfolding of cellulose nanofibers to various usages, a demand has arisen for the development of cellulose nanofibers with various properties. One such example is a cellulose nanofiber with a short fiber length. Examples of usages of cellulose nanofibers with a short fiber length may include coating a substrate with the cellulose nanofiber dispersion to form a film on the substrate, or mixing the cellulose nanofiber dispersion with a coating material containing a pigment and a binder. When the viscosity of a cellulose nanofiber dispersion is too high in the process of coating a substrate with the dispersion to form a film thereon, a problem is that the dispersion cannot be coated evenly. On the other hand, when the dispersion is diluted for even coating, a problem is that coating and drying have to be repeated many times until a desired film thickness is obtained, leading to poor efficiency. Moreover, in the case of mixing the dispersion into a coating material containing a pigment and a binder, and the viscosity of a cellulose nanofiber dispersion is too high, a problem is that the dispersion cannot be mixed evenly into the coating material. Against these problems, it is considered to use a cellulose nanofiber dispersion having low viscosity prepared by cellulose nanofibers with short fiber lengths.

As production methods of cellulose nanofiber dispersion having low viscosity, the following methods have been reported: a method comprising subjecting oxidized cellulose to an enzyme treatment before defibration (Patent Documents 2 and 3), a method comprising subjecting oxidized cellulose to oxidative degradation by adding hydrogen peroxide and ozone before defibration (Patent Document 4), a method comprising subjecting oxidized cellulose to UV ray radiation before defibration (Patent Document 5), a method comprising subjecting oxidized cellulose to a hydrolysis treatment by adding acid before defibration (Patent Document 6).

### CITATION LIST

### PATENT DOCUMENTS

Patent Document 1: Japanese patent publication No. 2008-001728
Patent Document 2: Japanese patent publication No. 2009-298972
Patent Document 3: Japanese patent publication No. 22010-235679
Patent Document 4: Japanese patent publication No. 2010-235681
Patent Document 5: Japanese patent publication No. 2010-236109
Patent Document 6: Japanese patent publication No. 2010-275659

### SUMMARY OF INVENTION

### TECHNICAL PLOBLEM

The above methods allow production of cellulose nanofiber dispersion having a B-type viscosity (60 rpm, 20°C) of about a few hundred to 1000 mPa·s when a concentration of the dispersion is 1% (w/v), but a production of cellulose nanofiber dispersion with lower viscosity is desirable, since such dispersion provides an advantage of maintaining fluidity at a higher dispersion concentration, which allows it be handled similarly to conventional dispersion having low concentration.

In view of the above problem, the present invention aims to provide finer cellulose nanofibers that can give a cellulose nanofiber dispersion having an even lower viscosity than conventional dispersion.

SOLUTION TO PROBLEM

As a result of extensive and intensive studies, the present inventors were successful in producing cellulose nanofibers with an unprecedentedly short fiber length, namely, an average fiber length of 250 nm or lower, and an average fiber diameter of 2 to 5 nm. By using the cellulose nanofibers of the present invention, it is possible to produce a cellulose nanofiber dispersion having a low viscosity even at a high concentration, specifically, a B-type viscosity (60 rpm, 20°C) of 1000 mP·s or lower when a concentration of the dispersion is 3% (w/v).

The present invention provides (1) to (3) shown below.

(1) Cellulose nanofibers having a number average fiber length of 250 nm or lower, and a number average fiber diameter of 2 to 5 nm.

(2) A cellulose nanofiber dispersion, wherein the cellulose nanofibers of (1) above are dispersed in a dispersion medium.

(3) The cellulose nanofiber dispersion according to (2) above, wherein the B-type viscosity (60 rpm, 20°C) at a concentration of 3% (w/v) is 1000 mPa·s or lower.

ADVANTAGEOUS EFFECTS OF INVENTION

The present invention provides extremely fine cellulose nanofibers, which are unprecedented, specifically, cellulose nanofibers having a number average fiber length of 250 nm or lower, and a number average fiber diameter of 2 to 5 nm. By using the cellulose nanofibers of the present invention, it is possible to prepare a cellulose nanofiber dispersion having a lower viscosity than conventional dispersion. For example, whereas a conventional cellulose nanofiber dispersion having a concentration of 1% (w/v) exhibits a B-type viscosity (60 rpm, 20°C) of about a few hundred to 1000 mPa·s, the 1% (w/v) cellulose nanofiber dispersion of the present invention exhibits a viscosity of about 1 to 30 mPa·s. Furthermore, when using the cellulose nanofibers of the present invention, dispersion having a low viscosity, such as 1000 mPa·s or lower, may be prepared even at a concentration of 3% (w/v).

The ability to give dispersion having low viscosity even at a high concentration makes cellulose nanofibers advantageous for industrial use. Advantages include, for example, the ability to form films with smooth and even surfaces, the ability to form films with the desired thickness by only a few times of coating, and the ability to shorten the drying time of the dispersion medium when coating a substrate with the dispersion to form a film.

DESCRIPTION OF EMBODIMENTS

The cellulose nanofiber is generally defined as a single microfibril having a fiber diameter of 1 to 100 nm. The cellulose nanofibers of the present invention are characterized by having an average fiber length of 250 nm or lower and an average fiber diameter of 2 to 5 nm. An "average fiber length" and an "average fiber diameter" in the present invention respectively refer to the number average fiber length and the number average fiber diameter.

The fiber length and fiber diameter affect viscosity when the cellulose nanofibers are formed into a dispersion. A large fiber length leads to thickening and decreased fluidity. The cellulose nanofibers of the present invention have an average fiber length of 250 nm or lower and an average fiber diameter of 2 to 5 nm, so they can give dispersion having a low viscosity and good fluidity. Cellulose nanofibers having an average fiber length of 200 nm or lower or an average fiber diameter of 2 to 4 nm are preferable, since they can give dispersion having an even lower viscosity. The lower limit of the average fiber length is not particularly set. A shorter fiber length is more preferable, since it can give a dispersion having a lower viscosity. As an actual matter, the lower limit of the average fiber length may be about 50 nm, or about 100 nm.

The fiber length and fiber diameter can be obtained from an electron micrograph or an atomic force micrograph of cellulose nanofibers.

Cellulose nanofibers having an average fiber length of 250 nm or lower and an average fiber diameter of 2 to 5 nm can be produced, for example, by using pulp obtained by hydrolysis treatment and subsequent kraft cooking as a starting material (known as "dissolved pulp by kraft process" or "DKP"), oxidizing the pulp using an oxidant in the presence of (A) a N-oxyl compound, and (B) a compound selected from a group consisting of bromide, iodide and mixtures thereof, then, defibrating the pulp to form nanofibers.

The "pulp obtained by hydrolysis treatment and subsequent kraft cooking (DKP)" means pulp obtainable by kraft cooking of a hydrolyzed plant material, such as wood chip, kenaf, hemp, rice, bagasse or bamboo under general conditions. By the hydrolysis treatment of a plant material before kraft cooking, hemicellulose contained in the plant material is converted into water-soluble sugars and released. Thus obtained DKP contains much less hemicellulose than that in common kraft pulp (KP) which has not been hydrolyzed. The hemicellulose content of common kraft pulp (KP) is about 10 to 30 weight %, whereas that of pulp obtained by hydrolysis treatment and subsequent kraft cooking

(DKP) in the present invention is about 1 to 5 weight %, which varies with the type of plant materials used. Incidentally, the hemicellulose content of sulfite pulp is about 3 to 5 weight %.

The hemicellulose content of pulp may be determined as described below. After 300 mg of freeze-dried pulp is left to stand at room temperature for 2 hours in 3 mL of 72% sulfuric acid, the mixture is diluted to a sulfuric acid concentration of 2.5% and heated at 105°C for 1 hour to cause hydrolysis reaction and give a monosaccharide solution. The obtained solution is diluted as appropriate and monosaccharides are quantified by ion chromatography (DX-500, a product of Dionex; Column: AS-7; Eluent: water; Flow rate: 1.1 ml/min). From the xylose and mannose contents of the solution obtained by the acid hydrolysis, the hemicellulose content is calculated by the following equation: Hemicellulose content (%) = (xylose content (mg) $\times$ 0.88 + mannose content (mg) $\times$ 0.9) / amount of pulp (mg) $\times$ 100 (%)

The type of a plant material used in the preparation of DKP is not particularly limited. Softwood or hardwood chip which is generally used for pulping, kenaf, hemp, rice, bagasse, bamboo or the like may be used.

DKP is characterized in that it has been subjected to hydrolysis as a pretreatment before kraft cooking. One of hydrolysis processes is the direct steaming process. It is considered that by this process, high-temperature vapor blown into a plant material releases organic acids contained in the plant material, then, the action of those acids cause hydrolysis.

The conditions for the hydrolysis treatment are not particularly limited. For example, the treatment may be performed using an autoclave apparatus or the like to contact water or 2 weight % or lower of a liquid-phase or vapor-phase mineral acid with a plant material, such as wood chips, and treat the plant material at a temperature of 140 to 200°C, preferably 150 to 170°C, for 15 to 120 minutes, preferably 20 to 90 minutes. A mineral acid or sulfur dioxide may be added as a catalyst. The pH of the liquid phase or the vapor phase is about 2 to 5, preferably about 3 to 4. The ratio of the liquid phase or the vapor phase to the weight (bone dry weight) of a plant material (liquor ratio) is preferably about 0.5 to 5.0 L/kg, more preferably 1.2 to 3.5 L/kg, in terms of reaction efficiency.

It is preferred that after the hydrolysis treatment, a neutralization treatment is performed by using a mixture of sodium hydroxide and sodium sulfide, a cooking white liquor or the like. The neutralization treatment can reduce alkali consumption in the subsequent kraft cooking. As a neutralizing solution, for example, a solution of a mixture of sodium hydroxide, sodium sulfide and the like that have been mixed so that the solution has 5 to 20% active alkali (versus the weight of a plant material) and 15 to 35% sulfidity may be used in a liquor ratio of about 1.0 to 5.0 L/kg based on a plant material (bone dry weight). The neutralization treatment is preferably performed at 140 to 170°C for about 10 to 120 minutes.

In the preparation of DKP, the conditions for the kraft cooking performed after the hydrolysis treatment are not particularly limited, but the method used in the preparation of common kraft pulp may be used. For example, in a digester, a cooking liquor (white liquor) containing caustic soda (sodium hydroxide) and sodium sulfide as main components may be added to a plant material to impregnate the plant material with the cooking liquor generally at a temperature of about 110 to 120°C and then the plant material may be retained at 160 to 170°C for about 2 to 10 hours and cooked until the H-factor reaches about 350 to 2000. As a cooking liquor, for example, a solution of a mixture of sodium hydroxide, sodium sulfide and the like that have been mixed so that the solution has 5 to 30% active alkali (versus the weight of a plant material) and 20 to 40% sulfidity may be used in a liquor ratio of about 2.0 to 4.0 L/kg based on a plant material (bone dry weight).

DKP to be used may be a commercial product. For example, Product Name: SULFATATE-H-J-FA, by Rayonier Inc. and the like may be used.

DKP may be bleached. The method of bleaching is not particularly limited, and conventional methods can be used. For example, DKP arbitrarily delignified with oxygen in a common manner may be bleached in a sequence consisting of a combination of chlorination (C), chlorine dioxide bleaching (D), alkali extraction (E), hypochlorite bleaching (H), hydrogen peroxide bleaching (P), alkaline hydrogen peroxide treatment (Ep), alkaline hydrogen peroxide and oxygen treatment (Eop), ozone treatment (Z), chelate treatment (Q) and the like, such as D-E/P-D, C/D-E-H-D, Z-E-D-P, Z/D-Ep-D, Z/D-Ep-D-P, D-Ep-D, D-Ep-D-P, D-Ep-P-D, Z-Eop-D-D, Z/D-Eop-D or Z/D-Eop-D-E-D (The symbol "/" in the sequences means that the treatments shown in front of and behind the symbol "/" are performed continuously without washing.) Lignin, a colored substance in pulp, is dissolved off by kraft cooking, and the addition of the bleaching treatment enables the obtaining of pulp having higher brightness. It is desirable that the brightness of pulp is 65% or higher or 80% or higher according to ISO 2470.

N-oxyl compounds to be used in oxidizing pulp are compounds that may generate nitroxy radicals, and includes, for example, compounds that generate the nitroxy radical shown by Formula 1 below.

Formula 1]

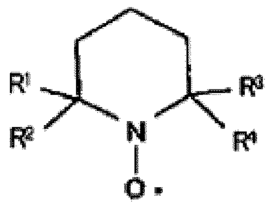

Formula 1

wherein $R^1$ to $R^4$, which may be the same or different, each represent an alkyl group having about 1 to 4 carbon atoms.

Among these substances, 2,2,6,6-tetramethyl-1-piperidin-N-oxyradical (referred to hereinafter as "TEMPO") and 4-hydroxy-2,2,6,6-tetramethyl-1-piperidin-N-oxyradical (referred to hereinafter as "4-hydroxy TEMPO") are preferred. Derivatives of these substances can also be used. In particular, 4-hydroxy TEMPO derivatives to which appropriate hydrophobicity has been imparted is preferable. Examples include derivatives obtained by etherification of the hydroxyl group of 4-hydroxy TEMPO with an alcohol having 4 or lower carbons in a straight chain or a branched carbon chain, or derivatives obtained by esterification with carboxylic acid or sulfonic acid.

Additionally, 4-acetamide TEMPO to which appropriate hydrophobicity has been imparted by acetylation of the amino group of 4-amino TEMPO is preferred since it is inexpensive and enable homogeneous oxidized pulp to be obtained.

[Formula 2]

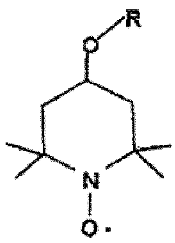

Formula 2

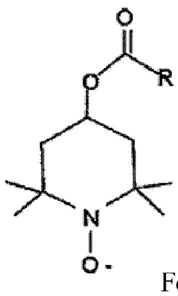

Formula 3

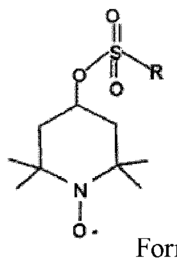

Formula 4

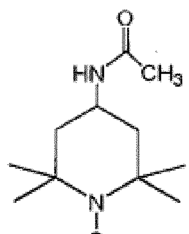

Formula 5

In Formulas 2 to 5, R is a straight or branched carbon chain having 4 or lower carbon atoms.

Further, radicals ofN-oxyl compounds represented by Formula 6 below, i.e., aza-adamantane type nitroxy radicals, are preferred since they can oxidize pulp efficiently within a short reaction time.

[Formula 3]

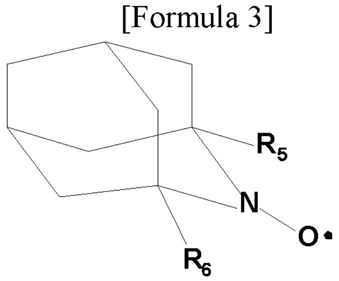

Formula 6

In Formula 6, $R_5$ and $R_6$, which may be the same or different, each represent a hydrogen atom or a $C_1$-$C_6$ straight or branched alkyl group.

The amount of an N-oxyl compound may be a catalytic amount sufficient to oxidize pulp so that the obtained oxidized pulp can be formed into nanofibers. For example, the N-oxyl compound may be in an amount of about 0.01 to 10 mmol, preferably about 0.01 to 1 mmol, more preferably about 0.05 to 5 mmol, per 1 g (bone dry weight) of pulp.

The bromide used in the oxidation of pulp is a compound containing bromine, and its example includes an alkali metal bromide, which can be dissociated in water and ionized. The iodide is a compound containing iodine, and its example includes an alkali metal iodide. The amount of the bromide or iodide used may be selected from within a range that can promote the oxidation reaction. For example, the total amount of the bromide and the iodide may be about 0.1 to 100 mmol, preferably about 0.1 to 10 mmol, more preferably about 0.5 to 5 mmol, per 1 g (bone dry weight) of pulp.

An oxidant used in the oxidation of pulp in the present invention is a known oxidant, such as a halogen, a

hypohalogenous acid, a halogenous acid, a perhalogenic acid, or a salt thereof, a halogen oxide, or a peroxide. Sodium hypochlorite, which is inexpensive and less harmful to the environment, is preferable. The amount of oxidant to be used may be selected from a range promoting oxidation reaction. The amount is, for example, about 0.5 to 500 mmol, preferably about 0.5 to 50 mmol, more preferably about 2.5 to 25 mmol, per 1 g (bone dry weight) of pulp.

The temperature applied during the oxidation reaction may be a room temperature of about 15 to 30°C. As the reaction proceeds, carboxyl groups are generated in cellulose and hence, a decline in the pH of the reaction mixture is observed. To proceed with the oxidation reaction efficiently, it is preferable to maintain the pH of the reaction mixture at about pH 9 to 12, preferably about pH 10 to 11, by adding an alkaline solution such as an aqueous sodium hydroxide solution. The reaction medium should preferably be water due to its ease of handling, the unlikelihood of it causing side reaction, and the like.

The above oxidation reaction oxidizes the primary hydroxyl group at position 6 of the pyranose ring in the cellulose of pulp to a carboxyl group or a salt thereof. A pyranose ring is a six-membered ring carbohydrate consisting of 5 carbons and 1 oxygen. The primary hydroxyl group at position 6 is an OH group binding to the six-membered ring via a methylene group. When cellulose is subjected to an oxidation reaction of cellulose using a N-oxyl compound, the primary hydroxyl group is selectively oxidized. The mechanism is explained below. Natural cellulose is a bundle of nanofibers when it is biosynthesized; in the bundle, a large number of nanofibers are converged by hydrogen bonds. When cellulose fibers are oxidized using an N-oxyl compound, the primary hydroxyl group at position C6 of the pyranose ring is selectively oxidized, and this oxidation reaction remains at the surface of the microfibril, so carboxyl groups are introduced at a high concentration only in the surface of the microfibril. The carboxyl groups are negatively charged, so they are mutually repulsive, and their dispersion in water inhibits aggregation of microfibrils with each other. Consequently, the fiber bundle is released by microfibril units and form cellulose nanofibers, which are single microfibrils of cellulose.

The carboxyl group introduced in position C6 of the above cellulose may form salts with alkali metals, etc. The amount of carboxyl group and salts thereof (collectively referred to hereinafter as "carboxyl group, etc.") is preferably 1.10 mmol/g or higher against the dry weight of cellulose nanofiber. The carboxyl group, etc. is a polar group, so when the amount of carboxyl group, etc. is high, cellulose nanofibers in films or laminates tend to bond more strongly to each other. Hence, the oxygen barrier property improves. In addition, since the cellulose nanofibers bond strongly to each other and form a smooth film, the gloss of the paper formed from the nanofibers is also improved. Accordingly, the lower limit of this amount is more preferably 1.20 mmol/g or higher, and even more preferably 1.40 mmol/g or higher. However, under a condition for obtaining much carboxyl groups, the oxidation reaction is apt to be accompanied by a side reaction in which cellulose is cut, which is uneconomic since the yield decreases. Thus, the upper limit of the amount of carboxyl group, etc. is preferably 1.80 mmol/g or lower, more preferably 1.70 mmol/g or lower.

The amount of the carboxyl group, etc. can be calculated through the following steps: preparing 60 ml of 0.5 weight % slurry of the oxidized pulp, adjusting its pH to 2.5 with a 0.1M aqueous hydrochloric acid solution, then adding a 0.05N aqueous sodium hydroxide solution dropwise thereto while measuring the electrical conductivity until the pH reaches 11, and calculating the amount of carboxyl groups on the basis of the amount of sodium hydroxide (a) consumed in the stage of neutralization with weak acid where the electrical conductivity changes slowly, using the following formula:

$$\text{Amount of carboxyl groups [mmol/g pulp]} = \text{a [ml]} \times 0.05 / \text{weight of oxidized pulp [g]}$$

The oxidized pulp is then defibrated to be transformed to cellulose nanofibers. Defibration may be performed by using a mixing/agitating, emulsifying/dispersing device, such as high-speed shearing mixer or a high pressure homogenizer, alone or by a combination of 2 or more types, as necessary. In the process, the size of oxidized pulp (fiber length and fiber diameter) decreases as the fibers loosen and single microfabrils are formed. In particular, a use of an ultrahigh pressure homogenizer achieving a pressure of 100 MPa or higher, preferably 120 MPa or higher, and more preferably 140 MPa or higher, is preferable, since it allows cellulose nanofibers to be efficiently formed into short fibers and be dispersed so that cellulose nanofibers that exhibit low viscosity when they form a aqueous dispersion are efficiently produced.

To further reduce the energy required for defibrating, the oxidized pulp may be subjected to a suitable cutting (also known as "viscosity-reducing treatment") of the cellulose chains (form short fibers from the cellulose chain) before defibration. Such treatment includes, for example, a treatment that radiates ultraviolet rays on oxidized pulp, a treatment that contacts oxidized pulp with hydrogen peroxide and ozone for oxidative decomposition, a treatment that hydrolyzes oxidized pulp with acid, a treatment that hydrolyzes oxidized pulp with alkali, a treatment with enzymes, such as cellulase, or a combination of these treatments.

For example, a treatment that hydrolyzes oxidized pulp with alkali may be performed by preparing a dispersion liquid of oxidized pulp (an aqueous dispersion liquid is preferable), adjusting the pH of the dispersion liquid to 8 to 14, preferably 9 to 13, more preferably 10 to 12, and setting the temperature to 40 to 120°C, preferably 50 to 100°C, and

more preferably 60 to 90°C, and the time to 0.5 to 24 hours, preferably 1 to 10 hours, and more preferably 2 to 6 hours. To adjust the pH of the dispersion liquid, an alkaline aqueous solution, such as sodium hydroxide, may be used. Also, it is preferable to add an oxidant or a reductant as an assistant. The oxidant or reductant to be used may be that having activity in the alkali region of pH 8 to 14. Examples of oxidants include oxygen, ozone, hydrogen peroxide, and hypochlorite, etc. Among these, oxygen, hydrogen peroxide, hypochlorite, etc. that are unlikely to generate radicals are preferable and hydrogen peroxide is the most preferable. In addition, examples of reductants include sodium borohydride, hydrosulfite, sulfite, etc.

The cellulose nanofibers of the present invention may be used as a dispersion. In the dispersion, cellulose nanofibers of the present invention are dispersed in the dispersion medium. As a dispersion medium, water is preferable in terms of handling. A dispersion is useful in terms of the industrial use of the cellulose nanofibers.

The B-type viscosity of a cellulose nanofiber dispersion using the cellulose nanofibers of the present invention is 100 mPa·s or lower at a concentration of 2% (w/v). Further, a viscosity of 1000 mPa·s or lower at a concentration of 3% (w/v) is preferable. The viscosity is measured with a B-type viscometer at 20°C, 60 rpm, and rotor No.4. The lower limit of the B-type viscosity is not particularly set, but as an actual matter, the lower limit should be about 10 mPa·s at a concentration of 2% (w/v), and about 100 mPa·s at a concentration of 3% (w/v).

The aqueous dispersion of cellulose nanofibers prepared by using the cellulose nanofibers of the present invention is transparent, observed by unaided eyes, in which the cellulose nanofibers are evenly dispersed in water. The transparency of the cellulose nanofiber dispersion can be expressed by measuring the transmission of light having a wavelength of 660 nm using a spectrophotometer. The light transmission (wavelength of 660 nm) of a cellulose nanofiber aqueous dispersion having 0.1% (w/v) concentration is 95% or higher, preferably 98% or higher.

The dispersion can be prepared by an arbitrary method. For example, the dispersion can be prepared by the steps of preparing oxidized pulp, then adding dispersion medium, such as water, and dispersing the pulp as it is defibrated using an ultrahigh pressure homogenizer, etc.

## EXAMPLES

Examples are provided below to explain the present invention in more detail, but the present invention is not limited thereby.

### <Viscosity>

The concentration of a cellulose nanofiber aqueous dispersion (% (w/v)) that provides a B-type viscosity (60 rpm, 20°C) measured by TV-10 viscometer (Toki Sangyo Co., Ltd.) of 1000 mPa·s was used as an index of viscosity. A value of 3% (w/v) or higher under this condition can be referred to as "the B-type viscosity (60 rpm, 20°C) at a concentration of 3% (w/v) is 1000 mPa·s or lower."

### <Average Fiber Length>

The fiber length is measured based on the atomic force micrograph (3000 nm × 3000 nm) of cellulose nanofiber fixed on a mica piece to obtain a number average fiber length. Fiber length was measured for length in a range of 100 nm to 2000 nm using an image analysis software WinROOF (Mitani Corporation).

### <Average Fiber Diameter>

A cellulose nanofiber aqueous dispersion diluted to a cellulose nanofiber concentration of 0.001 weight% was prepared. The diluted dispersion was spread thinly on a mica platform, heated/dried at 50°C to create a specimen for observation, and the height of the cross section of the shape image observed by the atomic force microscope (AFM) was measured, and the number average fiber diameter was obtained.

### [Example 1]

### <Preparation of DKP>

### <Hydrolysis and Cooking>

Into a 2.4 L-volume rotary autoclave, 300 g (bone dry weight) of hardwood chip was put and water was added thereto to adjust the liquor ratio to 2 L/kg. The mixture was retained at 170°C for 30 minutes to perform hydrolysis treatment and then neutralized with a neutralizing solution at 155°C for 15 minutes. The neutralizing solution was prepared

by mixing sodium hydroxide and sodium sulfide so that the solution had 11% active alkali (versus the weight of the chip), 25% sulfidity and a liquor ratio of 2.5 L/kg. After the neutralization treatment, liquid was withdrawn from the autoclave, a cooking liquor (which was prepared by mixing sodium hydroxide and sodium sulfide so that the cooking liquor had 9% active alkali (versus the weight of the chip), 25% sulfidity and a liquor ratio of 2.5 L/kg) was added, and a cooking process was performed at 160°C until the H-factor reached 830.

<Bleaching>

The cooked unbleached pulp was delignified with oxygen and then bleached in the sequence of D0-E/P-D1 as ECF bleaching. Oxygen delignification was performed with Quantum high intensity mini mixer, and after the reaction, the pulp was well washed. The bleaching was all performed in a water bath, using pulp slurry (pulp conc. 10%) in a plastic bag. After the bleaching, fresh water was used for dilution to a pulp concentration of 1.5% and water obtained by pressing was used for several-times of washing. In the subsequent bleaching stage, the water obtained by pressing in the previous stage was used to adjust the pulp concentration to 15%, and then bleaching was performed with a predetermined amount of a bleaching chemical to adjust the pulp concentration to 10%. It is to be noted that no drainage water produced in the previous oxygen delignification stage was introduced in the D0 stage. Oxygen delignification: Pulp conc. 10%; Amount of sodium hydroxide added 4.0%; Initial oxygen pressure 6.0 kg/cm$^2$; Reaction temperature 98°C; Reaction time 60 min. D0: Pulp conc. 10%; Amount of chlorine dioxide added 10 kg/ADTP (Air Dried Tons Pulp, 1 ton of air-dried pulp) (corresponding to 0.9 ton of bone-dry pulp); Reaction temperature 55°C; Reaction time 40 min. E/P: Pulp conc. 10%; Amount of sodium hydroxide added 7.0 kg/ADTP; Amount of hydrogen peroxide added 2.7 g/ADTP; Reaction temperature 65°C; Reaction time 90 min. D1: Pulp conc. 10%; Amount of chlorine dioxide added 1.5 kg/ADTP; Reaction temperature 65°C; Reaction time 180 min. By the bleaching treatment described above, unbeaten bleached pulp (brightness: 86%) was obtained.

The hemicellulose content of the obtained pulp was determined to be 3% in the following manner:

After 300 mg of freeze-dried pulp was reacted at room temperature for 2 hours in 3 mL of 72% sulfuric acid, the mixture was diluted to a sulfuric acid concentration of 2.5% and heated at 105°C for 1 hour to give a monosaccharide solution through hydrolysis reaction. The obtained solution was diluted as appropriate and monosaccharides were quantified by ion chromatography (DX-500, a product of Dionex; Column: AS-7; Eluent: water; Flow rate: 1.1 ml/min). From the xylose and mannose contents of the solution obtained by the acid hydrolysis, the hemicellulose content was calculated by the following equation: Hemicellulose content (%) = (xylose content (mg) $\times$ 0.88 + mannose content (mg) $\times$ 0.9) / amount of pulp (mg) $\times$ 100 (%)

<Oxidation of Pulp>

Five grams (bone dry weight) of the aforementioned unbeaten bleached pulp was added to 500 ml of an aqueous solution obtained by dissolving 78 mg (0.5 mmol) of TEMPO (Sigma Aldrich) and 754 mg (7.4 mmol) of sodium bromide, and the mixture was stirred until the pulp was evenly dispersed. To the reaction system, 16 ml of a 2M aqueous sodium hypochlorite solution was added, and then the pH was adjusted to 10.3 with a 0.5N aqueous hydrochloric acid solution to initiate oxidation reaction. While the pH of the system decreased during the reaction, a 0.5N aqueous sodium hydroxide solution was successively added to adjust the pH to 10. After the mixture was reacted for 2 hours, it was passed through a glass filter and well washed with water to give oxidized pulp.

<Defibration of Oxidized Pulp and Preparation of the Dispersion>

An amount of 500 ml of 4% (w/v) oxidized pulp slurry obtained was treated 10 times with an ultrahigh pressure homogenizer (20°C, 140 MPa) to give a transparent gelatinous cellulose nanofiber dispersion.

[Example 2]

A commercial bleached hardwood DKP (LDKP by Rayonier Inc., product name: SULFATE-H-J-FA, hemicelluloses content 0.8%) in an amount of 100 g (bone dry weight) was added to 10 L of an aqueous solution containing 1.56 g of dissolved TEMPO (by SigmaAldrich Co. LLC) and 15.1 g of dissolved sodium bromide, and the solution was agitated until pulp was evenly dispersed.

Sodium hypochlorite solution (active chlorine 5%) in an amount of 360 ml was added to the reaction system, then 0.5N hydrochloric acid solution was used to adjust the pH to 10.3 and to initiate an oxidation reaction. The pH in the system decreases during the reaction, so a 0.5N sodium hydroxide solution was successively added to adjust the pH to 10. After the mixture was reacted for 2 hours, it was passed through a glass filter and well washed with water to

give oxidized pulp.

To 30 g (bone dry weight) of oxidized pulp were added 11.25 ml of NaOH and 4 ml of 30% hydrogen peroxide solution, and ultrapure water was added to adjust the concentration to 5% (w/v), then, the mixture was heated in an autoclave at 80°C for 2 hours (alkali hydrolysis treatment).

The oxidized pulp after the alkali hydrolysis treatment was subjected to centrifugation for solid/liquid separation. The obtained solid fraction was washed and dehydrated, then ultrapure water was added to adjust the concentration to 4% (w/v), and the mixture was treated 10 times with an ultrahigh pressure homogenizer (20°C, 140 MPa) to give a transparent gelatinous dispersion.

[Example 3]

A transparent cellulose nanofiber dispersion (4% (w/v)) was obtained by a method similar to Example 2, except for using a commercial softwood DKP (by Buckeye Co., Product Name: V-5).

[Comparative Example 1]

Oxidized pulp was obtained by a method similar to Example 2, except for using a commercial hardwood kraft pulp (mixed material of *Eglobithis* and *E.obliqua* (mixed ratio 30:70), hemicellulose content 17.3%). Similarly to Example 2, the oxidized pulp was subjected to an alkali hydrolysis treatment, then it was subjected to solid/liquid separation and washing/dehydration. Ultrapure water was added to adjust the concentration to 4% (w/v), and the mixture was subjected to an ultrahigh pressure homogenizer treatment, but its high viscosity and lack of fluidity inhibited the treatment from being carried out, so it was diluted to 2% to be treated 10 times with an ultrahigh pressure homogenizer to give a transparent cellulose nanofiber dispersion (2% (w/v)).

[Comparative Example 2]

Oxidized pulp was obtained by a method similar to Example 2, except for using a commercial softwood kraft pulp (Nippon Paper Industries Co., Ltd., hemicelluloses content 14.2%). Similarly to Example 2, the oxidized pulp was subjected to an alkali hydrolysis treatment, then it was subjected to solid/liquid separation and washing/dehydration. Ultrapure water was added to adjust the concentration to 4% (w/v), and the mixture was subjected to an ultrahigh pressure homogenizer treatment, but its high viscosity and lack of fluidity inhibited the treatment from being carried out, so it was diluted to 3% to be treated 10 times with an ultrahigh pressure homogenizer to give a transparent cellulose nanofiber dispersion (3% (w/v)).

[Comparative Example 3]

A transparent gelatinous cellulose nanofiber dispersion (4% (w/v)) was obtained by a method similar to Example 2, except for using a commercial hardwood kraft pulp (by PE-TEL Co., derived from A.mangium, hemicelluloses content 12.3%).

[Comparative Example 4]

A transparent cellulose nanofiber dispersion (4% (w/v)) was obtained by a method similar to Comparative Example 3, except that treatment with an ultrahigh pressure homogenizer was performed 15 times.

[Comparative Example 5]

A transparent cellulose nanofiber dispersion (4% (w/v)) was obtained by a method similar to Comparative Example 3, except that treatment with an ultrahigh pressure homogenizer was performed 30 times.

[Comparative Example 6]

Water was added to 100 g of commercial hardwood kraft pulp (by PE-TEL Co., derived from *A.mangium,* hemicelluloses content 12.3%) to adjust the liquor ratio to 20 L/kg, and left to stand at 170°C for 30 minutes to perform hydrolysis treatment to obtain a cellulose material. The obtained cellulose material was used to obtain a transparent cellulose nanofiber dispersion (4% (w/v)) similarly to Example 2.

[Comparative Example 7]

A transparent gelatinous cellulose nanofiber dispersion (4% (w/v)) was obtained by a method similar to Comparative Example 6, except that treatment with an ultrahigh pressure homogenizer was performed 15 times.

[Comparative Example 8]

Oxidized pulp was obtained by a method similar to Example 2, except for using a commercial hardwood sulfite pulp (Nippon Paper Chemicals CO., LTD., hemicellulose content 3.3%). Similarly to Example 2, the oxidized pulp was subjected to an alkali hydrolysis treatment, then it was subjected to solid/liquid separation and washing/dehydration. Ultrapure water was added to adjust the concentration to 4% (w/v), and the mixture was subjected to an ultrahigh pressure homogenizer treatment, but its high viscosity and lack of fluidity inhibited the treatment from being carried out, so it was diluted to 2.5% to be treated 10 times with an ultrahigh pressure homogenizer to give a transparent cellulose nanofiber dispersion (2.5% (W/V)).

[Comparative Example 9]

A transparent cellulose nanofiber dispersion (2.5% (w/v)) was obtained by a method similar to Comparative Example 8, except that treatment with an ultrahigh pressure homogenizer was performed 30 times.

[Comparative Example 10]

Oxidized pulp was obtained by a method similar to Example 2, except for using a commercial softwood sulfite pulp (Nippon Paper Chemicals Co., Ltd., hemicellulose content 5.4%). Similarly to Example 2, the oxidized pulp was subjected to an alkali hydrolysis treatment, then it was subjected to solid/liquid separation and washing/dehydration. Ultrapure water was added to adjust the concentration to 4% (w/v), and the mixture was subjected to an ultrahigh pressure homogenizer treatment, but its high viscosity and lack of fluidity inhibited the treatment from being carried out, so it was diluted to 2.5% to be treated 10 times with an ultrahigh pressure homogenizer to give a transparent cellulose nanofiber dispersion (2.5% (w/v)).

[Table 1]

| | Starting material pulp | Concentration at defibration (% (w/v)) | No. of times of ultrahigh pressure homo treatment | Average fiber length (nm) | Average fiber width (nm) | Concentration of 1000 mPa·s (% (w/v)) |
|---|---|---|---|---|---|---|
| Ex. 1 | Hardwood DKP | 4 | 10 | 152 | 3 | 3.5 |
| Ex. 2 | Hardwood DKP | 4 | 10 | 144 | 3 | 3.5 |
| Ex. 3 | Softwood DKP | 4 | 10 | 170 | 3 | 3.5 |
| Comp. Ex. 1 | Hardwood KP | 2 | 10 | 471 | 3 | 1.3 |
| Comp. Ex. 2 | Softwood KP | 3 | 10 | 337 | 3 | 1.6 |
| Comp. Ex. 3 | Hardwood KP | 4 | 10 | 297 | 3 | 2.4 |
| Comp. Ex. 4 | Hardwood KP | 4 | 15 | 257 | 3 | 1.6 |
| Comp. Ex. 5 | Hardwood KP | 4 | 30 | 255 | 3 | 2.2 |
| Comp. Ex. 6 | Hardwood KP+hydrolysis | 4 | 10 | 264 | 3 | 2.0 |

(continued)

| | Starting material pulp | Concentration at defibration (% (w/v)) | No. of times of ultrahigh pressure homo treatment | Average fiber length (nm) | Average fiber width (nm) | Concentration of 1000 mPa·s (% (w/v)) |
|---|---|---|---|---|---|---|
| Comp. Ex. 7 | Hardwood KP+hydrolysis | 4 | 15 | 267 | 3 | 2.0 |
| Comp. Ex. 8 | Hardwood SP | 2.5 | 10 | 357 | 3 | 1 |
| Comp. Ex. 9 | Hardwood SP | 2.5 | 30 | 311 | 3 | 1.3 |
| Comp. Ex. 10 | Softwood SP | 2.5 | 10 | 360 | 3 | 1.6 |

The cellulose nanofibers of Examples 1 to 3 are extremely fine fibers, having an average fiber length that is half that of the cellulose nanofibers of Comparative Examples 1 to 10 or shorter. The result of Table 1 shows that the dispersions obtained by using such fine cellulose nanofibers (Examples 1 to 3) have a low B-type viscosity even at a high concentration, when compared to the dispersions of Comparative Examples 1 to 10. The ability to provide a dispersion with low viscosity even at a high concentration is advantageous for the industrial use of cellulose nanofibers. Advantages include, for example, the ability to form films with smooth and even surfaces, the ability to form films with the desired thickness by only a few times of coating, and the ability to shorten the drying time of the dispersion medium when forming the film on the substrate.

The results of Comparative Examples 3 to 5, the results of Comparative Examples 6 and 7, and the results of Comparative Examples 8 and 9 suggest that the average fiber length does not shorten significantly and the viscosity of the dispersion does not decrease even if the number of treatment by an ultrahigh pressure homogenizer is increased.

## Claims

1. Cellulose nanofibers having a number average fiber length of 250 nm or lower, and a number average fiber diameter of 2 to 5 nm.

2. A cellulose nanofiber dispersion, wherein the cellulose nanofibers of Claim 1 are dispersed in a dispersion medium.

3. The cellulose nanofiber dispersion of Claim 2, wherein a B-type viscosity (60 rpm, 20°C) at a concentration of 3% (w/v) is 1000 mPa·s or lower.

**INTERNATIONAL SEARCH REPORT**

International application No. PCT/JP2013/077220

A. CLASSIFICATION OF SUBJECT MATTER
*C08B15/08*(2006.01)i, *D21H11/18*(2006.01)i, *D21H11/20*(2006.01)i

According to International Patent Classification (IPC) or to both national classification and IPC

B. FIELDS SEARCHED

Minimum documentation searched (classification system followed by classification symbols)
C08B15/08, D21H11/18, D21H11/20

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
CAplus(STN), JSTPlus(JDreamIII), JMEDPlus(JDreamIII), JST7580(JDreamIII)

C. DOCUMENTS CONSIDERED TO BE RELEVANT

| Category* | Citation of document, with indication, where appropriate, of the relevant passages | Relevant to claim No. |
|---|---|---|
| A | JP 2012-012713 A (Oji Paper Co., Ltd.), 19 January 2012 (19.01.2012), entire text (Family: none) | 1-3 |
| A | WO 2009/069641 A1 (The University of Tokyo), 04 June 2009 (04.06.2009), entire text & EP 2216345 A1 & US 2010/0233481 A1 | 1-3 |
| A | WO 2011/071156 A1 (Kao Corp.), 16 June 2011 (16.06.2011), entire text & EP 2511346 A1 & US 2012/0283363 A1 | 1-3 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 October, 2013 (28.10.13) | 05 November, 2013 (05.11.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2013/077220

C (Continuation). DOCUMENTS CONSIDERED TO BE RELEVANT

| Category* | Citation of document, with indication, where appropriate, of the relevant passages | Relevant to claim No. |
|---|---|---|
| A | WO 2010/134357 A1 (The University of Tokyo), 25 November 2010 (25.11.2010), entire text (Family: none) | 1-3 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008001728 A
- JP 2009298972 A
- JP 22010235679 B
- JP 2010235681 A
- JP 2010236109 A
- JP 2010275659 A